# EUROPEAN PATENT APPLICATION

(11) **EP 1 876 569 A1**
(43) Date of publication of application: **09.01.2008**
(21) Application number: 06745513.9
(22) Date of filing: 20.04.2006
(51) Int. Cl.: G06T 13/00

(54) **DATA STRUCTURE FOR EXPRESSING VIDEO OBJECT, PROGRAM FOR GENERATING DATA STRUCTURE FOR EXPRESSING VIDEO OBJECT, METHOD FOR GENERATING DATA STRUCTURE FOR EXPRESSING VIDEO OBJECT, VIDEO SOFTWARE DEVELOPMENT DEVICE, IMAGE PROCESSING PROGRAM, VIDEO PROCESSING METHOD, VIDEO PROCESSING DEVICE, AND RECORDIN**

(30) Priority: 26.04.2005 JP 2005128349
(71) Applicant: SEGA CORPORATION, Tokyo 144-8531 (JP)
(72) Inventor: KONDOU, Fumihito, c/o SEGA CORPORATION, Tokyo 144-8531 (JP)
(74) Representative: Vinsome, Rex Martin
(86) International application number: PCT/JP2006/308332
(87) International publication number: WO 2006/118043

(57) **Abstract**

A video object representation data structure defines behavior of a video object to be displayed on a screen of an image processing device. The video object representation data structure includes a data file that includes a resource identifier list to specify one or more resources to be used for generating the video object, the resource identifier list containing at least a model data identifier as an identifier of model data related to the shape of the video object; and a plug-in list to specify one or more plug-ins for applying momentums as the behaviors of video representation functional units to the video object, the plug-in list containing an identifier and a parameter of each of the plug-ins.

## Description

### TECHNICAL FIELD

The present invention relates to a video object representation data structure, a program for generating a video object representation data structure, a method of generating a video object representation data structure, a video software development device, an image processing program, a video processing method, a video processing device, and a recording medium that are used for production and reproduction of video images such as video game images, demonstration images, car navigation images, etc.

### BACKGROUND ART

To develop a video game or the like, a number of video objects are used. Contents represented by such video objects are becoming more advanced and complex.

Conventionally, Programs called plug-ins are used for creating video objects. One plug-in is used for one video representation. The plug-ins are small programs for adding new features to application software. The plug-ins add functions that the application software did not have when it was distributed. Because requirements on application software evolve over time, plug-ins are often used for making the already distributed software meet such requirements. For now, the plug-ins are produced and distributed in order to satisfy certain requirements that are in demand due to some circumstances. That is, the effect achieved by introducing a "plug-in A" for an "additional requirement A" is satisfying the "additional requirement A".

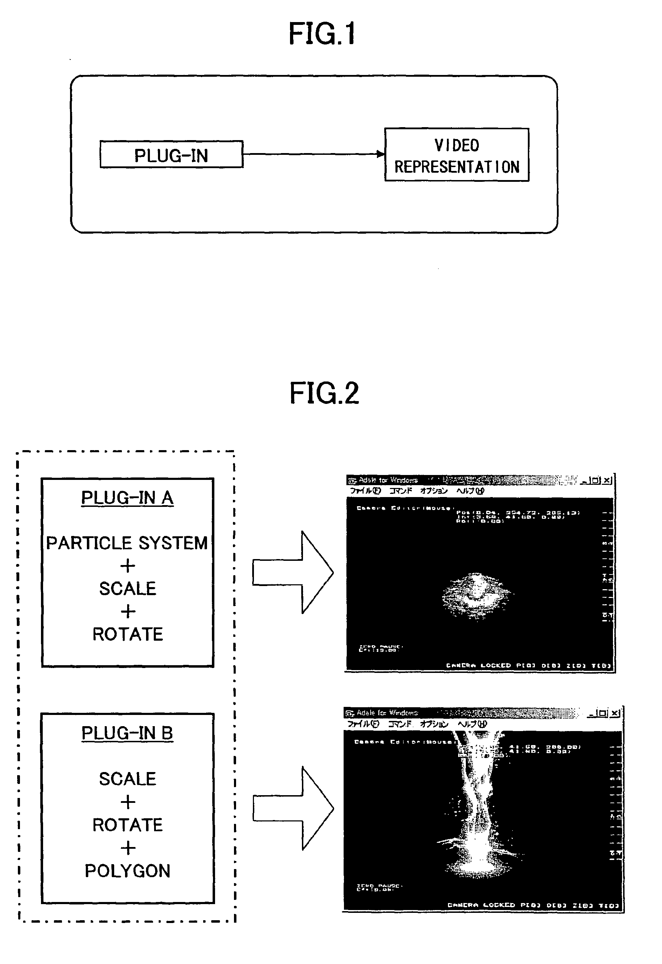

FIG. 1 is a conceptual diagram illustrating generation of a video representation according to a related-art technique, wherein a plug-in has a one-to-one correspondence with a video representation. FIG. 2 is a diagram illustrating functions of plug-ins in detail. In the example of FIG. 2, a plug-in A has functions, "Particle System" (a method that uses a group of particles to represent a shape that cannot be represented by a polygon or a curve and processes its motion as a probabilistic model), "Scale" (Zoom-In and Zoom-Out), and "Rotate". A plug-in B has functions, "Scale", "Rotate", and "Polygon". In the case where a designer wishes to create a video representation but it is difficult for him/her to create a plug-in necessary for creating the video representation, the designer requests a programmer to create the plug-in. The programmer creates the requested plug-in, and the designer creates the video representation using the plug-in. If the designer wishes to create another video representation that cannot be created with an existing plug-in, the designer requests the programmer to create another plug-in.

The applicant could not find any prior art document or publication related to the present invention at the time of filing, and therefore did not disclose any prior art documents or publications.

### DISCLOSURE OF THE INVENTION

As described above, the related-art plug-in technique uses the plug-in A to represent the video representation A based on the one-to-one correspondence. With this technique, however, designers might not be able to create desired video representations for reasons related to installation of applications or due to advancement in representation ideas over time.

Although the designers can have plug-ins if they request programmers to create them, the designers need to request the programmers to create plug-ins every time the designers wish to make even a small change in video representations, resulting in lowering development efficiency. Moreover, because the designers might not be able to tell the programmers exactly what plug-ins they need and the programmers might not be able to understand exactly what plug-ins the designers need, the designers might not be able to create exactly the video representations they want.

In view of the foregoing, the present invention is directed to provide a video object representation data structure, a program for generating a video object representation data structure, a method of generating a video object representation data structure, a video software development device, an image processing program, a video processing method, a video processing device, and a recording medium that significantly expand the range of representation of video objects and allow designers to create exactly the video objects that they want.

In an embodiment of the present invention, there is provided a video object representation data structure that defines behavior of a video object to be displayed on a screen of an image processing device. The video object representation data structure comprises a data file that includes a resource identifier list to specify one or more resources to be used for generating the video object, the resource identifier list containing at least a model data identifier as an identifier of model data related to the shape of the video object; and a plug-in list to specify one or more plug-ins for applying momentums as the behaviors of video representation functional units to the video object, the plug-in list containing an identifier and a parameter of each of the plug-ins.

The above-mentioned video object representation data structure may be configured such that the resource identifier list further contains a texture data identifier as an identifier of texture data related to a surface pattern of the video object, a motion data identifier of motion data related to a motion of the video object, and a morph motion data identifier of morph motion data related to morphing of the video object.

The above-mentioned video object representation data structure may be configured such that the data file further includes a group effect parameter to specify an effect that forms a group by iteratively generating the same video object, the group effect parameter containing at least information related to a generation probability.

The above-described video object representation data structure may be configured such that the group effect parameter further contains information about the iterative generation of the video object, the information being related to the minimum execution time, the maximum execution time, a generation interval, the generation interval effective time, the minimum simultaneous generation number, and the maximum simultaneous generation number.

The above-mentioned video object representation data structure may be configured such that the data file further includes a number LOD parameter to control the number of video objects that form a group based on the distance between a viewpoint and the video object, the number LOD parameter containing at least information related to the LOD maximum simultaneous generation number.

The above-described video object representation data structure may be configured such that the number LOD parameter further contains information about control of the number of video objects, the information being related to a LOD attenuation starting distance, a LOD attenuation ending distance, a LOD generation probability, and the LOD minimum simultaneous generation number.

The above-mentioned video object representation data structure may be configured such that the data file further includes a virtual resource identifier list to specify one or more virtual resources replaceable at the time of execution, the virtual resource identifier list containing virtual resource identifiers.

In an embodiment of the present invention, there is provided a recording medium storing the above-mentioned video object representation data structure.

In an embodiment of the present invention, there is provided a program for generating a video object representation data structure that defines behavior of a video object to be displayed on a screen of an image processing device. The program comprises an editing unit to specify one or more resources to be used for generating the video object and specify one or more plug-ins for applying a momentum as the behavior of the video object by using a GUI, and store resulting information in an intermediate language; and a data building unit to analyze and optimize the intermediate language so as to output a data file as binary data, wherein the data file includes a resource identifier list that specifies said one or more resources to be used for generating the video object, the resource identifier list containing at least a model data identifier as an identifier of model data related to the shape of the video object, and a plug-in list that specifies said one or more plug-ins for applying momentums as the behaviors of video representation functional units to the video object, the plug-in list containing an identifier and a parameter of each of the plug-ins.

The above-mentioned video object representation data structure generation program may be configured such that the editing unit specifies, based on a group effect parameter containing at least information related to a generation probability, an effect that forms a group by iteratively generating the same video object.

The above-mentioned video object representation data structure generation program may be configured such that the editing unit controls, based on a number LOD parameter containing at least information related to the LOD maximum simultaneous generation number, the number of the video objects that form a group based on the distance between a viewpoint and the video object.

The above-mentioned video object representation data structure generation program may be configured such that the editing unit specifies, based on a virtual resource identifier list containing virtual resource identifiers, one or more virtual resources replaceable at the time of execution.

In an embodiment of the present invention, there is provided a recording medium storing the above-mentioned video object representation data structure generation program.

In an embodiment of the present invention, there is provided a method of generating a video object representation data structure that defines behavior of a video object to be displayed on a screen of an image processing device. The method comprises an editing step of specifying one or more resources to be used for generating the video object and specifying one or more plug-ins for applying a momentum as the behavior of the video object by using a GUI, and storing resulting information in an intermediate language; and a data building step of analyzing and optimizing the intermediate language so as to output a data file as binary data. The data file includes a resource identifier list that specifies said one or more resources to be used for generating the video object, the resource identifier list containing at least a model data identifier as an identifier of model data related to the shape of the video object, and a plug-in list that specifies said one or more plug-ins for applying momentums as the behaviors of video representation functional units to the video object, the plug-in list containing an identifier and a parameter of each of the plug-ins.

In an embodiment of the present invention, there is provided a video software development device that generates a video object representation data structure defining behavior of a video object to be displayed on a screen of an image processing device. The video software development device comprises a unit to specify one or more resources to be used for generating the video object and specify one or more plug-ins for applying a momentum as the behavior of the video object by using a GUI, and store resulting information in an intermediate language; and a unit to analyze and optimize the intermediate language so as to output a data file as binary data. The data file includes a resource identifier list that specifies said one or more resources to be used for generating the video object, the resource identifier list containing at least a model data identifier as an identifier of model data related to the shape of the video object, and a plug-in list that specifies said one or more plug-ins for applying momentums as the behaviors of video representation functional units to the video object, the plug-in list containing an identifier and a parameter of each of the plug-ins.

In an embodiment of the present invention, there is provided an image processing program for displaying a video object on a screen of an image processing device by inputting a first data structure that defines behavior of the video object and a second data structure that includes one or more resources. The image processing program comprises a behavior effect control unit to control a behavior effect by specifying one or more plug-ins that apply momentums as the behaviors of video representation functional units to the video object based on a plug-in list, the plug-in list containing an identifier and a parameter of each of the plug-ins; a resource specifying unit to specify one or more of the resources to be used for generating the video object based on a resource identifier list, the resource identifier list containing at least a model data identifier as an identifier of model data related to the shape of the video object; and a drawing unit to draw the video object using the specified one or more plug-ins and resources.

The above-mentioned image processing program may be configured such that the behavior effect control unit controls an effect that forms a group by iteratively generating the same video object based on a group effect parameter contained in the first data structure, the group effect parameter containing at least information related to a generation probability.

The above-mentioned image processing program may be configured such that the behavior effect control unit controls the number of the video objects to be generated for forming a group depending on the distance between a viewpoint and the video object based on a number LOD parameter contained in the first data structure, the number LOD parameter containing at least information related to the LOD maximum simultaneous generation number.

The above-mentioned image processing program may be configured such that the resource specifying unit overwrites a virtual resource, which is replaceable at the time of execution, with another resource based on a virtual resource identifier in a virtual resource identifier list contained in the first data structure.

In an embodiment of the present invention, there is provided a recording medium storing the above-mentioned image processing program.

In an embodiment of the present invention, there is provided an image processing method of displaying a video object on a screen of an image processing device by inputting a first data structure that defines behavior of the video object and a second data structure that includes one or more resources. The image processing method comprises a behavior effect control step of controlling a behavior effect by specifying one or more plug-ins that apply momentums as the behaviors of video representation functional units to the video object based on a plug-in list, the plug-in list containing an identifier and a parameter of each of the plug-ins; a resource specifying step of specifying one or more of the resources to be used for generating the video object based on a resource identifier list, the resource identifier list containing at least a model data identifier as an identifier of model data related to the shape of the video object; and a drawing step of drawing the video object using the specified one or more plug-ins and resources.

In an embodiment of the present invention, there is provided a video processing device that displays a video object on a screen of an image processing device by inputting a first data structure that defines behavior of the video object and a second data structure that includes one or more resources. The video processing device comprises a behavior effect control unit to control a behavior effect by specifying one or more plug-ins that apply momentums as the behaviors of video representation functional units to the video object based on a plug-in list, the plug-in list containing an identifier and a parameter of each of the plug-ins; a resource specifying unit to specify one or more of the resources to be used for generating the video object based on a resource identifier list, the resource identifier list containing at least a model data identifier as an identifier of model data related to a shape of the video object; and a drawing unit to draw the video object using the specified one or more plug-ins and resources.

According to an aspect of the present invention, a video object representation data structure, a program for generating a video object representation data structure, a method of generating a video object representation data structure, a video software development device, an image processing program, a video processing method, a video processing device, and a recording medium make it possible to significantly expand the range of representation of video objects by freely combining plug-ins, which are subdivided to the level of momentum as behavior of a video representation functional unit, to have a mutual effect. Accordingly, it is possible to create a video representation by selecting and an appropriate combination of plug-ins from an infinite number of combinations and using the selected combination even if the video representation was not known at the time the plug-ins were created. It is therefore possible to produce video representations that designers want without the need for the process of producing a new program by a programmer and the cost for it.

It has been thought that each time a new video presentation is created as a result of advancement of designers, a program for the new video presentation needs to be created. An embodiment of the present invention provides an infinite number of representation methods realized by an infinite number of combinations of momentums and therefore can logically deal with all the new video representations without the need for creating a new program.

Moreover, since designers can realize video representations that designers want by combining momentums, the designers rarely ask programmers to create new plug-ins, which results in a significant improvement in development efficiency.

### BRIEF DESCRIPTION OF THE DRAWINGS

FIG. 1 is a conceptual diagram illustrating generation of a video representation by a related-art plug-in;
FIG. 2 is a conceptual diagram illustrating generation of a video representation by a related-art plug-in;
FIG. 3 is a diagram showing an example of a relationship between a plug-in and a video object according to an embodiment of the present invention;
FIG. 4 is a diagram showing an example of a a relationship between a plug-in and a video object according to an embodiment of the present invention;
FIG. 5 is a diagram showing configuration examples of a video software development device and a video processing device according to an embodiment of the present invention;
FIG. 6 is a diagram showing a configuration example of a data building unit;
FIG. 7 is a diagram showing a configuration example of a video object representing data structure according to an embodiment of the present invention;
FIG. 8 is a diagram showing a configuration example of a plug-in management unit;
FIG. 9 is a diagram showing a configuration example of a structuring unit;
FIG. 10 is a diagram showing a configuration example of a behavior effect control unit;
FIG. 11 is a diagram showing a configuration example of a momentum breaking unit;
FIG. 12 is a diagram showing a configuration example of a drawing effect control unit;
FIG. 13 is a diagram showing configuration examples of a data optimization unit and a data management unit;
FIG. 14 is a diagram showing examples of a matrix type plug-in;
FIG. 15 is a diagram showing an example of sequentially applying matrix type plug-ins;
FIG. 16 is a diagram showing another example of sequentially applying matrix type plug-ins;
FIG. 17 is a diagram showing another example of a plug-in;
FIG. 18 is a diagram showing another example of a plug-in;
FIG. 19 is a diagram showing another example of a plug-in;
FIG. 20 is a flowchart illustrating an example of processing a group effect and the number LOD;
FIG. 21 illustrates display examples of a group effect;
FIG. 22 illustrates display examples of the number LOD;
FIG. 23 is a flowchart illustrating an example of overwriting a virtual resource; and
FIG. 24 is a conceptual diagram of overwriting of a virtual resource.

### DESCRIPTION OF REFERENCE NUMERALS

- 1: video software development device
- 11: material data
- 12: data editing plug-in operations unit
- 13: intermediate language file
- 14: data building unit
- 141: intermediate language analysis unit
- 142: resource optimization unit
- 143: momentum parameter optimization unit
- 144: behavior effect parameter optimization unit
- 145: data binarizing unit
- 2: video software
- 21: data file
- 211: virtual resource ID list
- 212: resource ID list
- 213: plug-in list
- 214: group effect parameter
- 215: number LOD parameter
- 22: resource file
- 221: model data
- 222: motion data
- 223: morph motion data
- 224: texture data
- 3: video processing device
- 31: operations input unit
- 32: total control unit
- 321: input interface unit
- 322: periodic processing unit
- 323: initialization unit
- 324: data loading unit
- 325: user registered plug-in
- 326: system providing plug-in
- 327: user controlled parameter
- 328: virtual resource overwrite information
- 33: momentum behavior providing unit
- 331: plug-in management unit
- 3311: plug-in input interface unit
- 3312: plug-in administration unit
- 332: momentum behavior distribution unit
- 34: video processing unit
- 341: user input interface unit
- 342: structuring unit
- 3421: data analysis unit
- 3422: data distribution unit
- 343: behavior effect control unit
- 3431: data receiving unit
- 3432: behavior effect execution unit
- 3432a: behavior effect parameter input interface unit
- 3432b: group effect control unit
- 3432c: LOD effect control unit
- 3432d: operating time information control unit
- 3433: behavior effect data distribution unit
- 344: momentum breaking unit
- 3441: leaf generating unit
- 3442: leaf management unit
- 3443: momentum behavior receiving unit
- 3444: leaf behavior control unit
- 345: resource matching unit
- 346: drawing effect control unit
- 3461: leaf data acquisition unit
- 3462: resource receiving unit
- 3463: drawing effect execution unit
- 3463a: matrix control unit
- 3463b: material control unit
- 3463c: blend mode control unit
- 3463d: texture control unit
- 3463e: fog control unit
- 3463f: drawing registration unit
- 347: group effect information
- 348: LOD effect information
- 349: operating time information
- 35: resource instance management unit
- 351: data optimization unit
- 3511: data receiving unit
- 3512: data analysis unit
- 352: data management unit
- 3521: data management interface unit
- 3522: data management control unit
- 353: data distribution unit
- 36: drawing unit

### BEST MODE FOR CARRYING OUT THE INVENTION

Preferred embodiments of the present invention are described below with reference to the accompanying drawings.

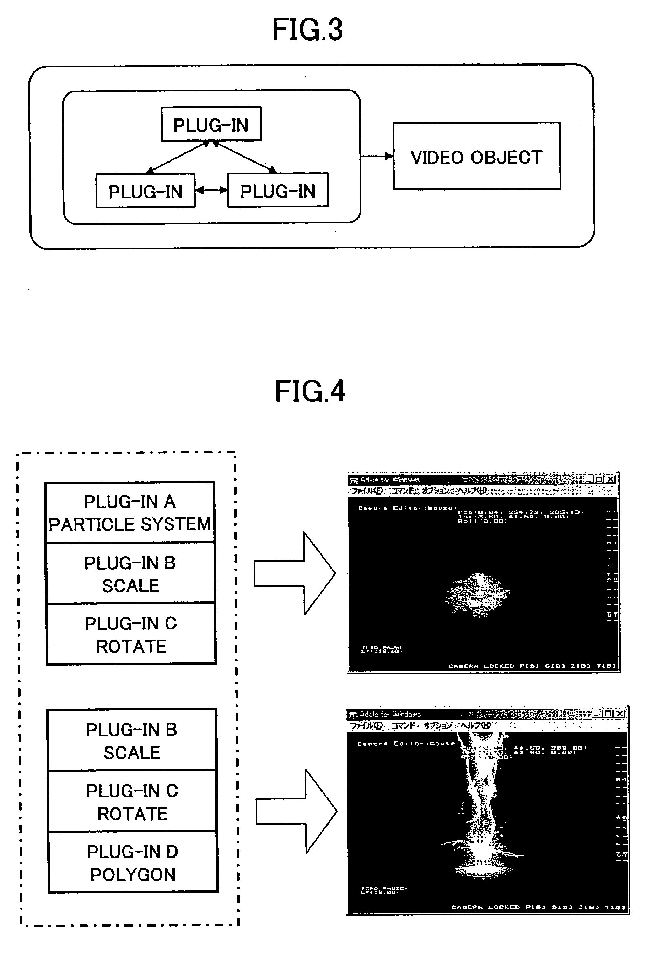

FIG. 3 is a diagram showing an example of a relationship between a plug-in and a video object according to an embodiment of the present invention. Referring to FIG. 3, in this embodiment of the present invention, plug-ins are subdivided to the level of momentum as behavior of a video representation functional unit, and a video representation is created by freely combining such plug-ins. FIG. 4 is a diagram illustrating functions of plug-ins in detail. In the example of FIG. 4, a plug-in A of "Particle System", a plug-in B of "Scale", and a plug-in C of "Rotate" are combined to create a video object, while a plug-in B of "Scale", a plug-in C of "Rotate", and a plug-in D of "Polygon" are combined to create another video object. In this way, since the plug-ins subdivided to the level of momentum as behavior of a video representation functional unit can be freely combined, it is possible to significantly expand the range of representation of a video object (i.e., exponentially increase the number of plug-in combinations) and allow designers to create exactly the video objects they want.

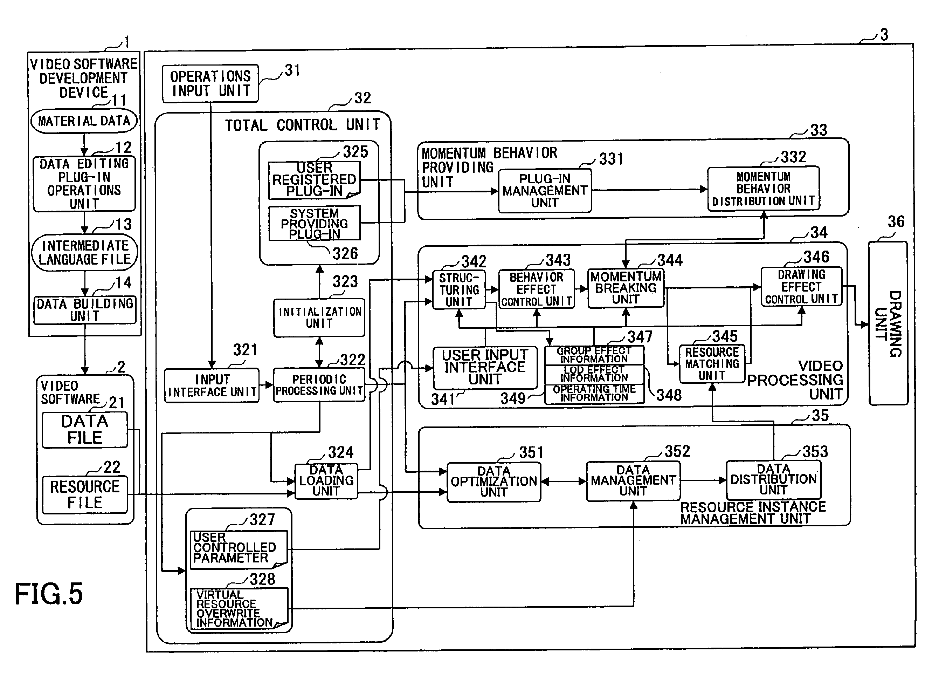

FIG. 5 is a diagram showing configuration examples of a video software development device 1 and a video processing device 3 according to an embodiment of the present invention. Referring to FIG. 5, the video software development device 1 includes a data editing plug-in operations unit 12 and a data building unit 14. The data editing plug-in operations unit 12 uses material data 11 created by a 3D CG (3 Dimensional Computer Graphics) tool or the like as resources (objects, such as textures and buffers for rendering scenes, that are defined outside an application and used inside the application). The data editing plug-in operations unit 12 is configured to specify one of more of the resources to be used for generating a video object and specify plug-ins for applying a momentum as behavior of the video object by using a GUI (Graphical User Interface), and then stores the resulting information as an intermediate language file 13 in a file format yet to be optimized for execution environments but suitable for data editing. The data building unit 14 is configured to analyze and optimize the intermediate language file 13 so as to output a data file 21 and a resource file 22 as video software 2 in the form of binary data.

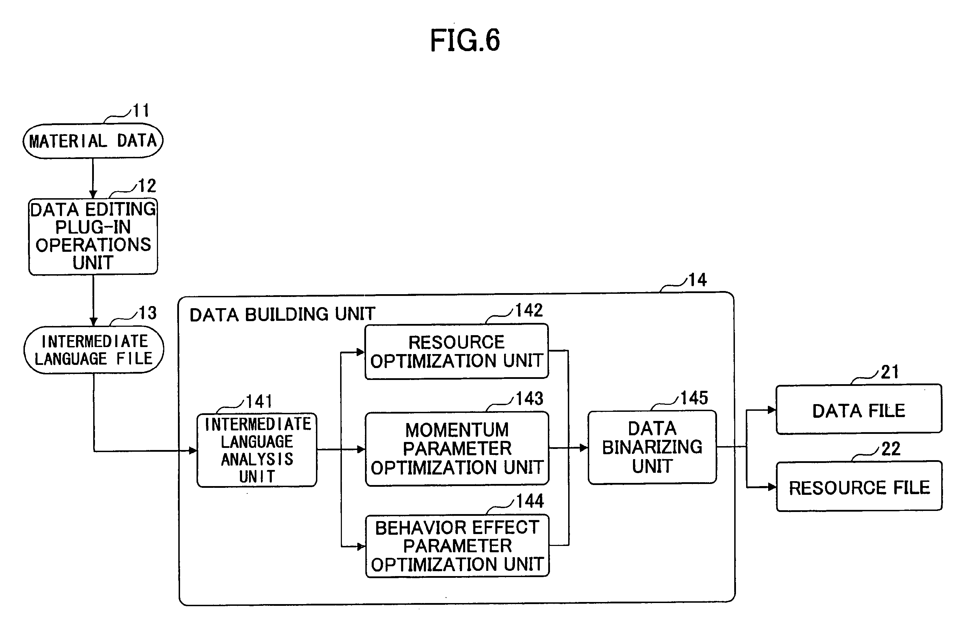

FIG. 6 is a diagram showing a configuration example of the data building unit 14. The data building unit 14 includes an intermediate language analysis unit 141 that analyzes the intermediate language file 13, a resource optimization unit 142 that optimizes the resource, a momentum parameter optimization unit 143 that optimizes a momentum parameter, a behavior effect parameter optimization unit 144 that optimizes a behavior effect parameter, and a data binarizing unit 145 that binarizes optimized data.

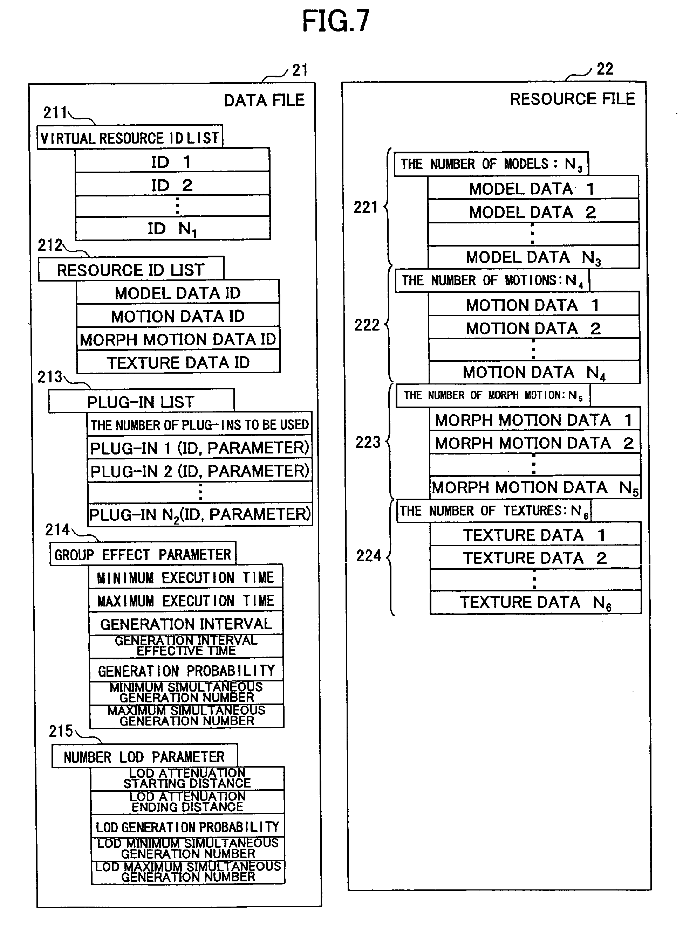

FIG. 7 is a diagram showing a configuration example of a video object representing data structure according to an embodiment of the present invention. The data file 21 includes a virtual resource ID list 211 and a resource ID list 212. The virtual resource ID list 211 specifies IDs (identifiers) of resources replaceable at the time of execution (hereinafter referred to as "virtual resources"). The resource ID list 212 includes a model data ID of model data related to the shape of a video object, a motion data ID of motion data related to a motion of the video object, a morph motion data ID of morph motion data related to morphing of the video object, and a texture data ID of texture data related to a surface pattern of the video object, and can specify resources to be used for generating the video object. The data file 21 further includes a plug-in list 213 and a group effect parameter 214. The plug-in list 213 can specify one or more plug-ins that apply momentums as behaviors of video representation functional units to the video object, and contains an identifier and a parameter of each plug-in. The group effect parameter 214 specifies an effect that forms a group by iteratively generating the same video object, and contains information about the iterative generation of the video object. This information is related to the minimum execution time (the minimum duration of iterative generation execution), the maximum execution time (the maximum duration of iterative generation execution), the generation interval (indicating the interval between the iterative generations), the generation interval effective time (indicating the number of time portions during which iterative generation can be executed: for example, if the generation interval is 2 and the effective time is 100, 50 objects are generated), the generation probability (the probability of generating the objects), the minimum simultaneous generation number (the minimum number of groups that can be generated in an object), and the maximum simultaneous generation number (the maximum number of groups that can be generated in an object). The data file 21 further includes a number LOD parameter 215. The number LOD parameter 215 controls the number of video objects forming a group based on the distance between a viewpoint and a video object, and contains information about control of the number of video objects. This information is related to the LOD (Level of Detail) attenuation starting distance (the distance where attenuation starts), the LOD attenuation ending distance (the distance where attenuation ends), the LOD generation probability (the probability of generating the objects within the LOD applied distance), the LOD minimum simultaneous generation number (the minimum number of the objects), and the LOD maximum simultaneous generation number (the maximum number of objects). The IDs may include identification numbers, character strings, and reference information such as storage addresses of the resources and plug-ins.

The resource file 22 includes model data 221 containing information indicating the number of data items of each data set. The resource file 22 also includes motion data 222, morph motion data 223, and texture data 224 each containing data instances.

Referring back to FIG. 5, the video processing device 3 includes an operations input unit 31, a total control unit 32 that performs total control, a momentum behavior providing unit 33 that provides information related to behavior of a momentum specified by a plug-in, a video processing unit 34 that generates a video object, a resource instance management unit 35 that manages an instance of a resource, and a drawing unit 36 that performs drawing. The total control unit 32 may include application programs such as game software, viewer software, and navigation software.

The total control unit 32 includes an input interface unit 321 that receives input from the operations input unit 31, a periodic processing unit 322 that performs periodic processing for each screen frame based on the input state of the input interface unit 321, an initialization unit 323 that initializes registration of a user registered plug-in 325 and a system providing plug-in 326 registered in the momentum behavior providing unit 33, and a data loading unit 324 that provides the data file 21 to the video processing unit 34 and the resource file 22 to the resource instance management unit 35 under the control of the periodic processing unit 322. Under the control of the periodic processing unit 322, a user controlled parameter 327 is provided to the video processing unit 34, and virtual resource overwrite information 328 is provided to the resource instance management unit 35.

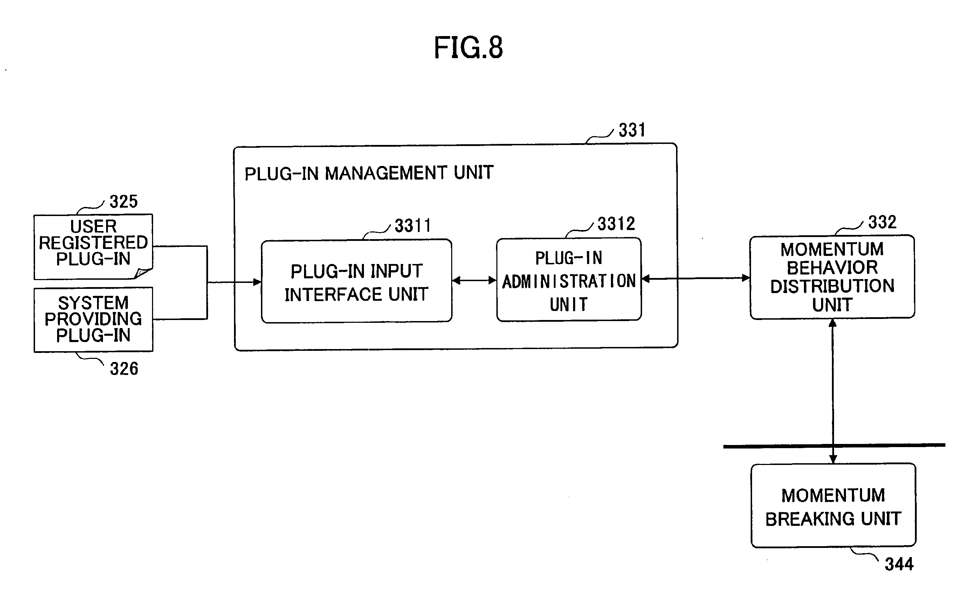

The momentum behavior providing unit 33 includes a plug-in management unit 331 that performs registration of a plug-in, and a momentum behavior distribution unit 332 that sends behavior of a plug-in in response to query from the video processing unit 34. FIG. 8 is a diagram showing an example of the plug-in management unit 331. The plug-in management unit 331 includes a plug-in input interface unit 3311 and a plug-in administration unit 3312. The plug-in input interface unit 3311 queries the plug-in administration unit whether a received plug-in has already been registered. If the plug-in has not been registered, the plug-in administration unit 3312 performs registration.

Referring back to FIG. 5, the video processing unit 34 includes a user input interface unit 341 that receives the user controlled parameter 327 from the total control unit 32; a structuring unit 342 that analyzes the received data file 21 and structures the plug-ins and information such as materials to be used; a behavior effect control unit 343 that processes behavior effect based on group effect information 347, LOD effect information 348, and operating time information 349 that are stored by the structuring unit 342; a momentum behavior breaking unit 344 that reflects behavior to an object to be drawn (hereinafter referred to as a "drawing object") based on momentum behavior obtained from the momentum behavior distribution unit 332 of the momentum behavior providing unit 33; a resource matching unit 345 that performs matching of the resource received from the resource instance management unit 35 and the current drawing object; and a drawing effect control unit 346 that performs effect controls such as matrix control, material control, blend mode control, and fog control on the resource matched drawing object according to the momentum.

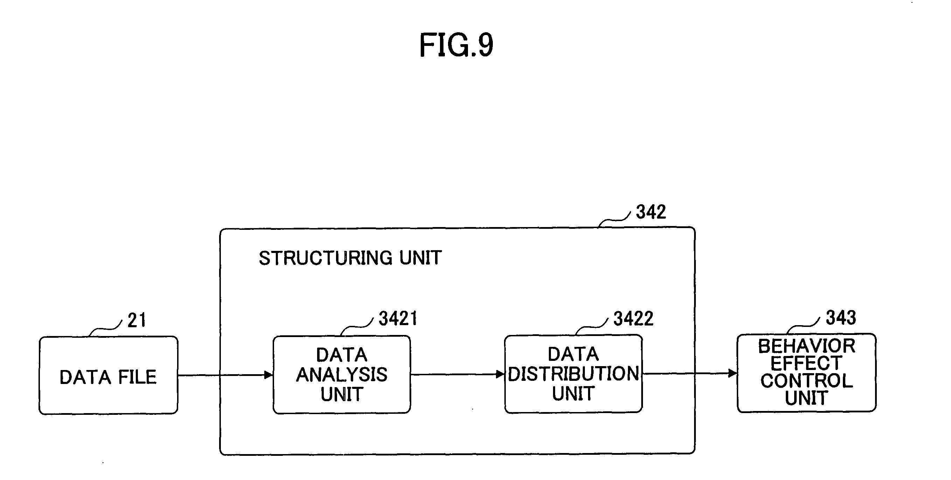

FIG. 9 is a diagram showing a configuration example of the structuring unit 342. The structuring unit 342 includes a data analysis unit 3421 that analyzes data and converts the data into a data structure processable by the video processing unit 34, and a data distribution unit 3422 that provides the analyzed data to the behavior effect control unit 343.

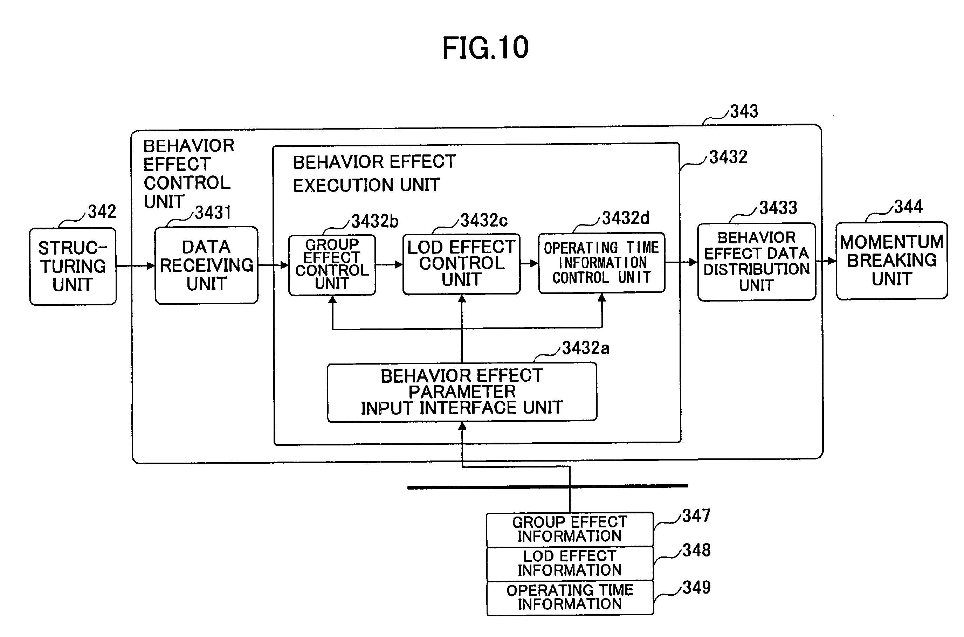

FIG. 10 is a diagram showing a configuration example of the behavior effect control unit 343. The behavior effect control unit 343 includes a data receiving unit 3431 that receives data from the structuring unit 342; a behavior effect execution unit 3432 that determines the generation timing of a leaf (a drawing object) and the number of leaves based on the group effect information 347, the LOD effect information 348, the operating time information 349, and the like; and a behavior effect data distribution unit 3433 that sends data to the momentum breaking unit 344. The behavior effect execution unit 3432 includes a behavior effect parameter input interface unit 3432a that receives the group effect information 347, the LOD effect information 348, and the operating time information 349; a group effect control unit 3432b that calculates the number of leaves to be generated and the generation interval; a LOD effect control unit 3432c that calculates the number of leaves to be generated based on the distance between the viewpoint (camera) and the video object; and an operating time information control unit 3432d that reflects control information about the operating time (start, end) and the like.

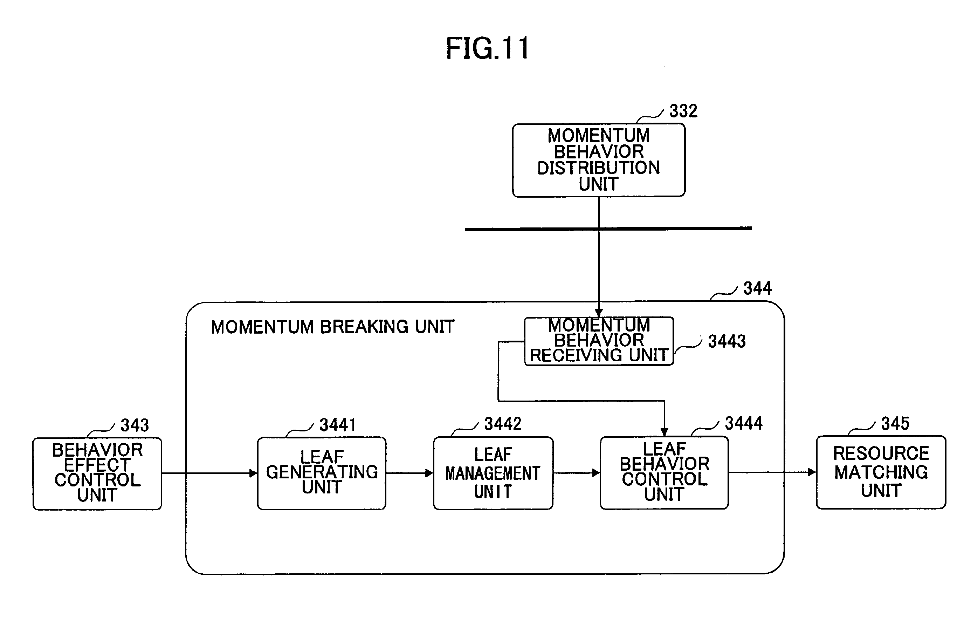

FIG. 11 is a diagram showing a configuration example of the momentum breaking unit 344. The momentum breaking unit 344 includes a leaf generation unit 3441 that generates a drawing object according to an instruction from the behavior effect control unit 343, a leaf management unit 3442 that manages the generated leaf, a momentum behavior receiving unit 3443 that receives momentum behavior from the momentum behavior distribution unit 332, and a leaf behavior control unit 3444 that reflects the behavior of the momentum to the leaf.

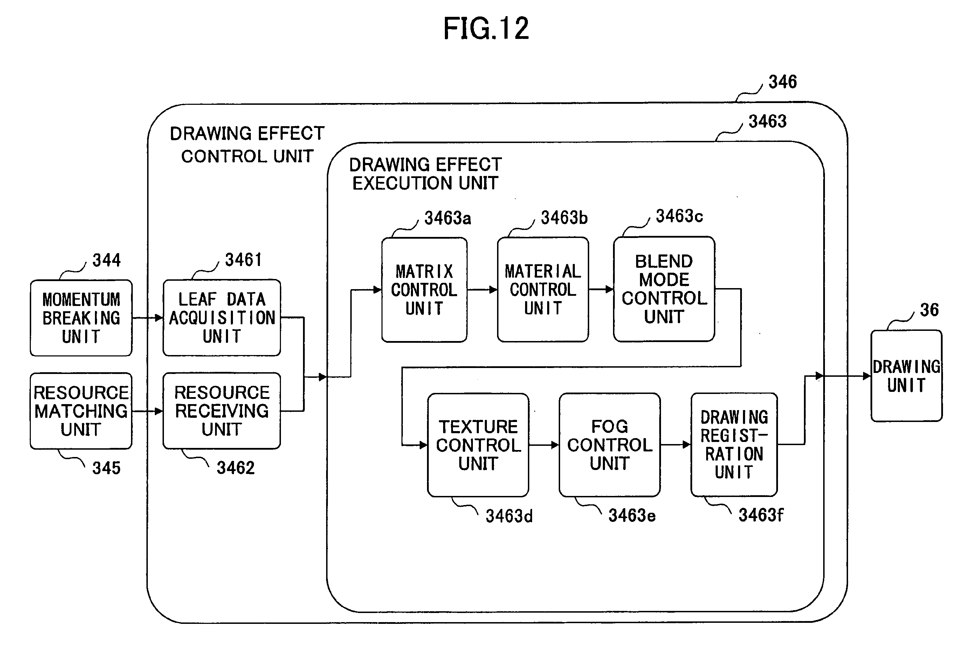

FIG. 12 is a diagram showing a configuration example of the drawing effect control unit 346. The drawing effect control unit 346 includes a leaf data acquisition unit 3461 that acquires the leaf data from the momentum breaking unit 344, a resource receiving unit 3462 that receives a resource from the resource matching unit 345, and a drawing effect execution unit 3463 that reflects the behavior set by the momentum breaking unit 344 to the object of the resource received from the resource matching unit 345. The drawing effect execution unit 3463 includes a matrix control unit 3463a that positions the object, a material control unit 3463b that determines the color of the object, a blend mode control unit 3463c that performs an operation for making the object translucent and the like, a texture control unit 3463d that draws a pattern on the surface of the object, a fog control unit 3463e that performs fogging, and a drawing registration unit 3463f that performs data registration for drawing.

Referring back to FIG. 5, the resource instance management unit 35 includes a data optimization unit 351, a data management unit 352, and a data distribution unit 353. The data optimization unit 351 determines whether the received resource file 22 has already been registered to prevent redundant registration. The data management unit 352 performs operations such as registration, deletion, and provision of the resource data; reception of the virtual resource; and overriding (changing the resources to be used by overwriting the ID in the memory). The data distribution unit 353 sends the resource data to the resource matching unit 345 of the video processing unit 34.

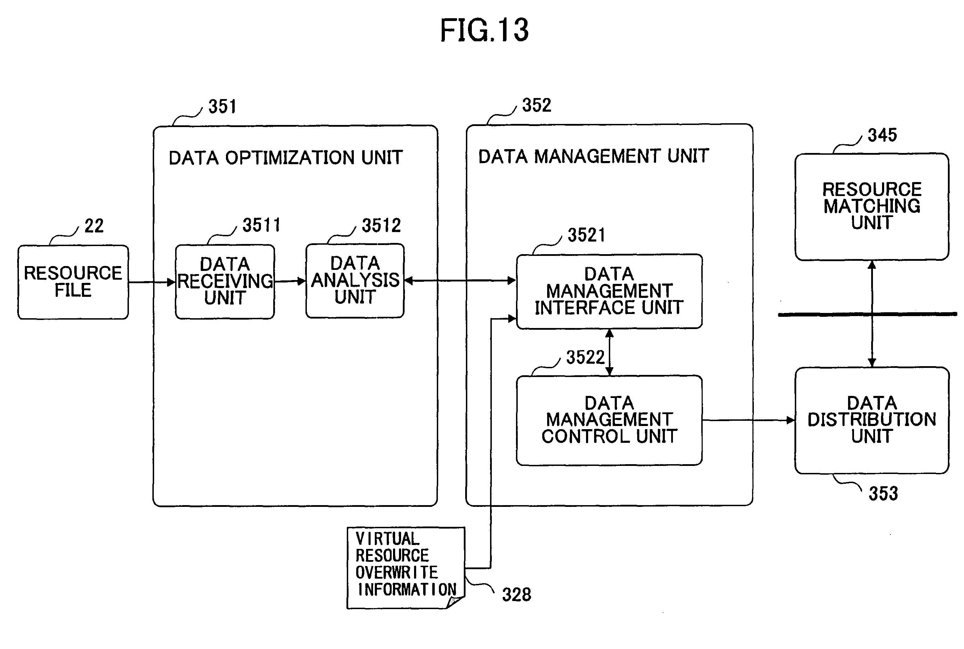

FIG. 13 is a diagram showing configuration examples of the data optimization unit 351 and the data management unit 352. The data optimization unit 351 includes a data receiving unit 3511 that receives the resource file 22, and a data analysis unit 3512 that analyzes the received resource file 22 and queries the data management unit 352 whether the resource file 22 has already been registered. The data management unit 352 includes a data management interface unit 3521 that receives the query about whether the resource file 22 has already been registered and the virtual resources, and a data management control unit 3522 that manages the registered data and performs redundancy checking and overriding the virtual resource.

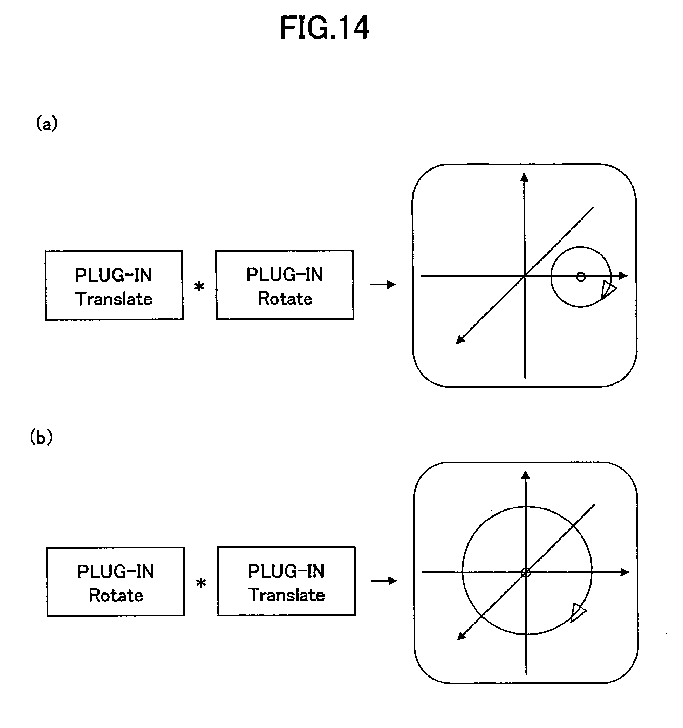

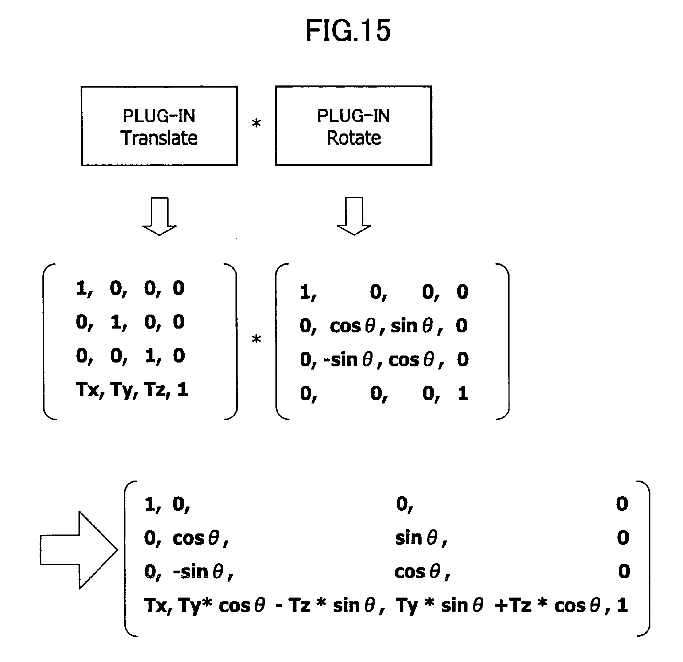

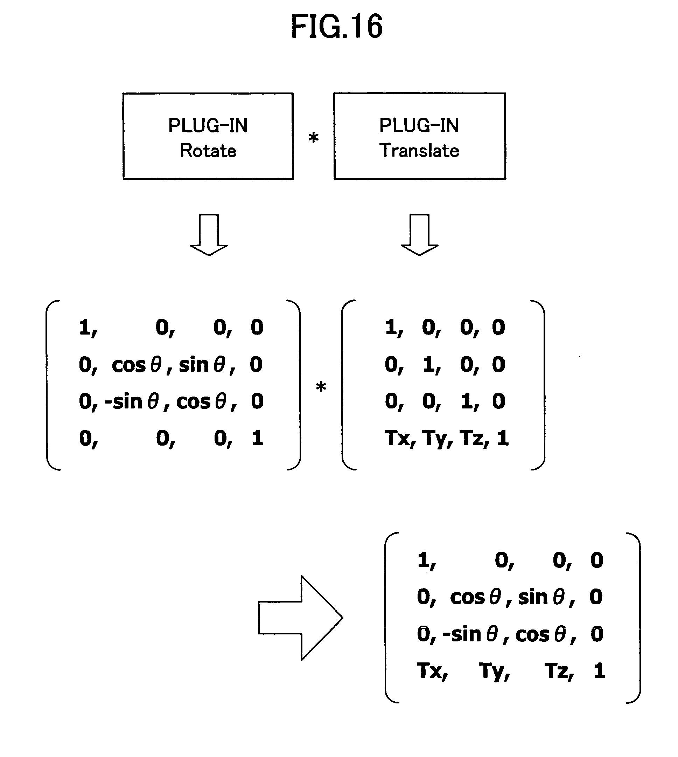

FIG. 14 is a diagram showing examples of a matrix type plug-in. FIG. 14-(a) shows the case where a plug-in of Translate is applied first and then a plug-in of Rotate is applied. FIG. 14-(b) shows the case where a plug-in of Rotate is applied first and then a plug-in of Translate is applied. FIG. 15 is a diagram illustrating the example of FIG. 14-(a) in greater detail. FIG. 16 is a diagram illustrating the example of FIG. 14-(b) in greater detail. Depending on the order of matrix operations, positioning of a target object varies.

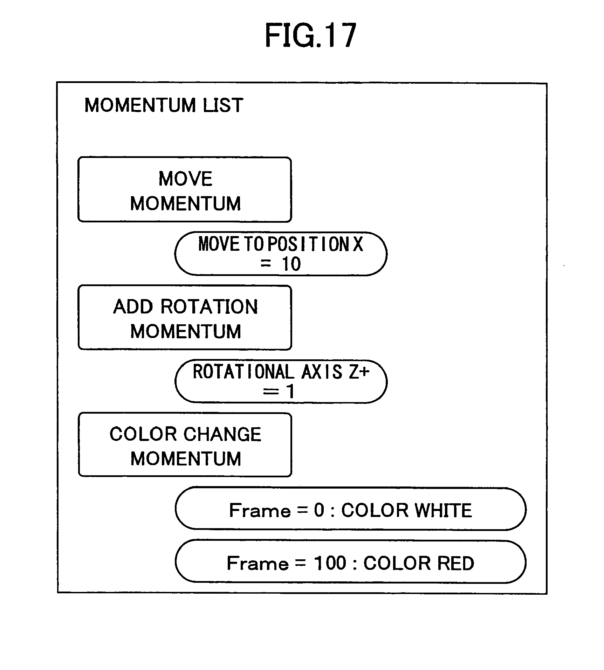

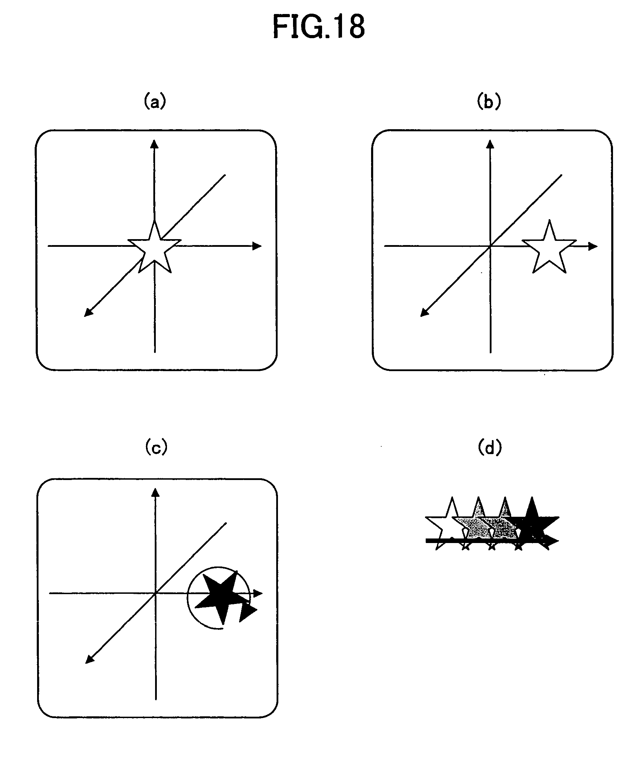

FIG. 17 is a diagram showing another example of a plug-in. A "Move" momentum, a momentum of "Add Rotation", and a momentum of "Color Change" are sequentially applied. In this case, before momentum is applied, a star-shaped object is in the origin as shown in FIG. 18-(a). Then the object is moved in the X-axis direction by the "Move" momentum as shown in FIG. 18-(b). Then the object is rotated in each frame by the "Add Rotation" momentum as shown in FIG. 18-(c). Then the color is changed by the "Color Change" momentum as shown in FIG. 18-(d).

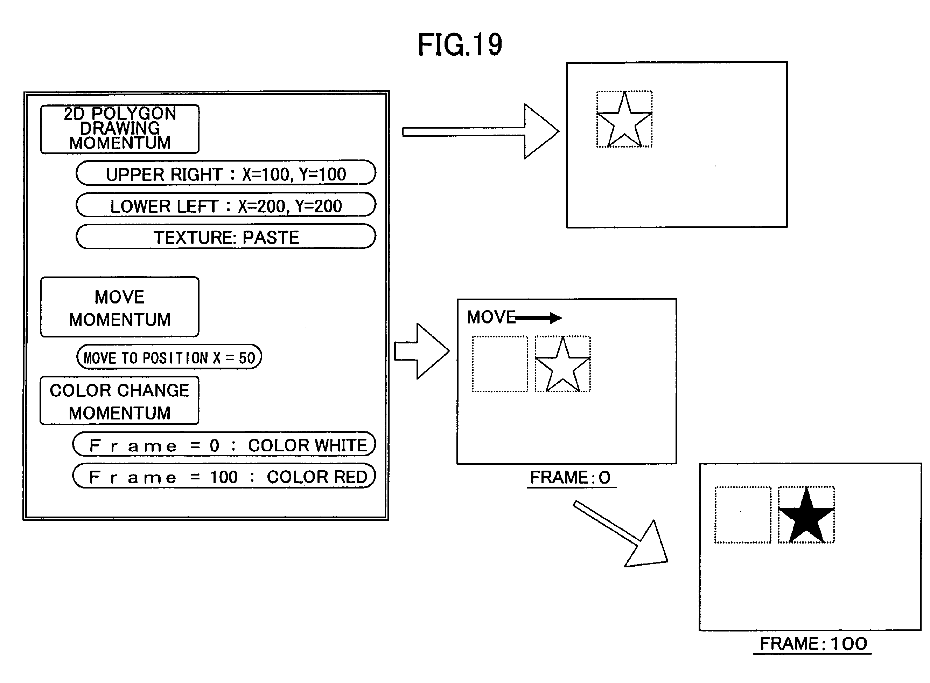

FIG. 19 is a diagram showing another example of a plug-in. In this example, a graphic is drawn by a momentum of "2D Polygon Drawing", and then a momentum of "Move" and a momentum of "Color Change" are sequentially applied to the graphic. In this case, an object is drawn by the momentum of "2D Polygon Drawing", and then moved in the x-axis direction by the momentum of "Move". Then the color is changed by the momentum of "Color Change". Other momentums as behaviors of video representation functional units may be used.

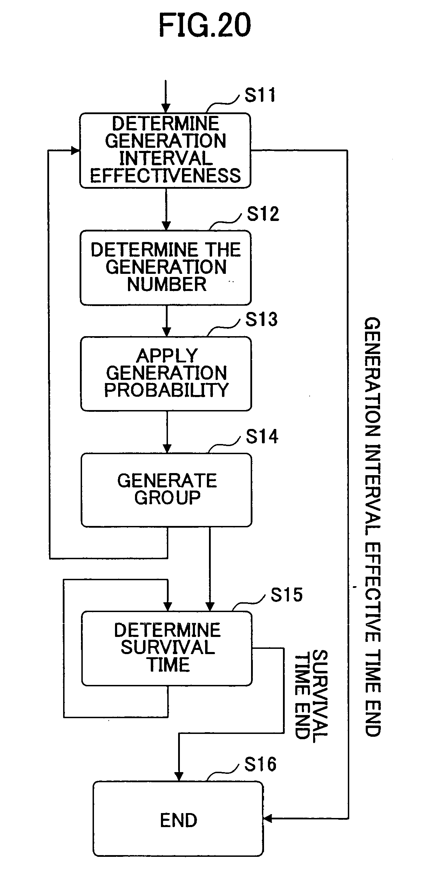

FIG. 20 is a flowchart illustrating an example of processing a group effect and the number LOD. This processing is performed by the video processing unit 34 of FIG. 5. In FIG. 20, the effectiveness of the generation interval is determined based on the generation interval and the generation interval effective time of the group effect parameter (Step S11). If effective, the generation number is determined (Step S12). The generation number is a random number selected between the minimum simultaneous generation number and the maximum simultaneous generation number. Then the generation probability of the group effect parameter is applied, and it is determined whether to generate the group (Step S13). Then, the group is generated (Step S14). Then it is determined whether the survival time has passed (Step S15). If the survival time has passed, the processing is terminated (Step S16). In the case where the number LOD is applied, the generation number and the generation probability vary depending on the distance between the object to which the group effect is applied and the viewpoint (camera). That is, if the distance is short, the generation number and the generation probability are increased. If the distance is long, the generation number and the generation probability are reduced (attenuated).

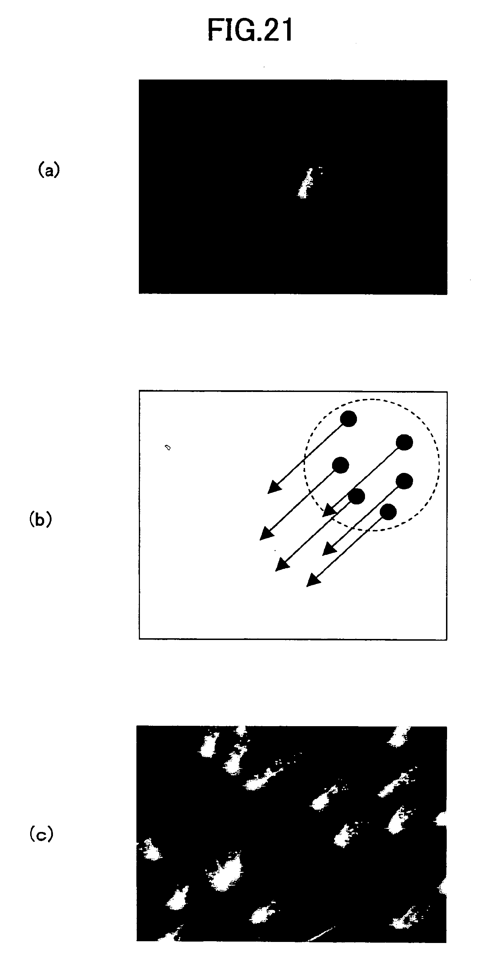

FIG. 21 illustrates display examples of a group effect. For example, in the case where a shower of blossoms is represented using a group effect, an object representing a petal of a flower as shown in FIG. 21-(a) is used for generating plural objects in random positions as shown in FIG. 21-(b). Thus a shower of blossoms as shown in FIG. 21-(c) is represented.

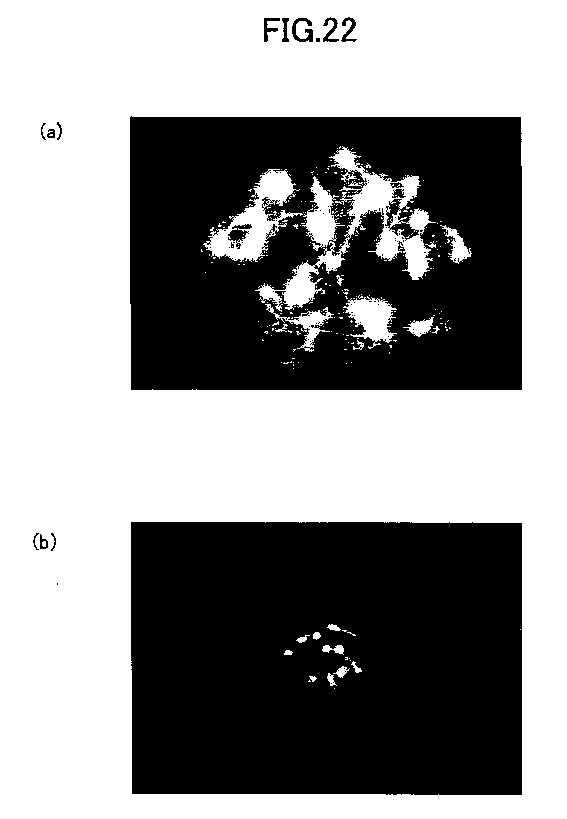

FIG. 22 illustrates display examples of the number LOD. If the distance from the viewpoint is short, many objects are displayed as shown in FIG. 22-(a) (in FIG. 22-(a), 30 objects with trails of lights are displayed in a position of a depth 200). If the distance from the view point is long, the number of the objects is reduced as shown in FIG. 22-(b) (in FIG. 22-(b), 10 objects with trails of lights are displayed in a position of a depth 500).

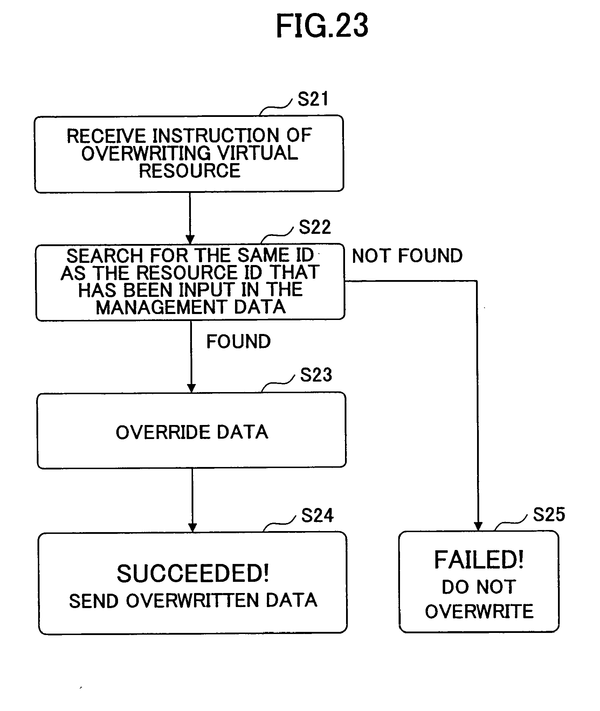

FIG. 23 is a flowchart illustrating an example of overwriting a virtual resource. This processing is performed by the resource instance management unit 35 of FIG. 5. In FIG. 23, if an instruction of overwriting a virtual resource is received (Step S21), the same ID as the resource ID that has been input in the management data is searched for (Step S22). If the same ID is found, the resource data are overwritten (Step S23). The overwritten data are sent to the video processing unit 34. If the same ID as the resource ID that has been input in the management data is not found, overwriting is not performed (Step S25).

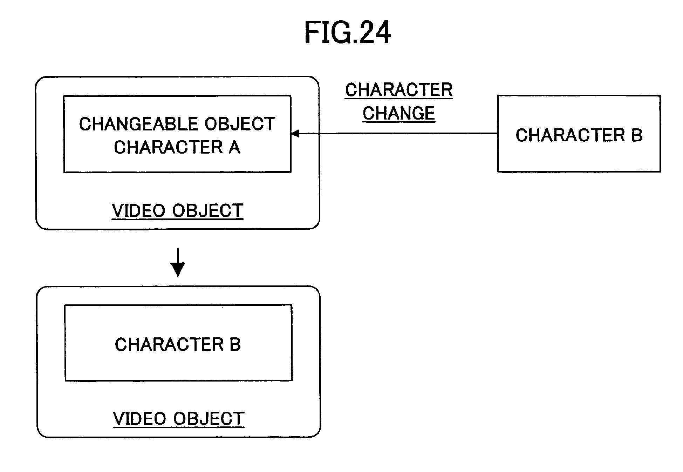

FIG. 24 is a conceptual diagram of overwriting of a virtual resource. A character A as a changeable object in a video object is replaced with a character B. It is possible to change only characters during execution of video software without affecting effects specified by momentums.

The present invention is described above in terms of preferred embodiments. Although the present invention is described above with reference to specific embodiments, it will be apparent that changes and modifications can be made without departing from the spirit and scope of the present invention as set forth in the appended claims. The present invention is not limited to the description of the specific embodiments and the attached drawings.

The present application is based on Japanese Priority Application No. 2005-128349 filed on April 26, 2005, with the Japanese Patent Office, the entire contents of which are hereby incorporated by reference.

## Claims

1. A video object representation data structure that defines behavior of a video object to be displayed on a screen of an image processing device, comprising:
a data file that includes
a resource identifier list to specify one or more resources to be used for generating the video object, the resource identifier list containing at least a model data identifier as an identifier of model data related to a shape of the video object; and
a plug-in list to specify one or more plug-ins for applying momentums as the behaviors of video representation functional units to the video object, the plug-in list containing an identifier and a parameter of each of the plug-ins.

2. The video object representation data structure as claimed in claim 1,
wherein the resource identifier list further contains a texture data identifier as an identifier of texture data related to a surface pattern of the video object, a motion data identifier of motion data related to a motion of the video object, and a morph motion data identifier of morph motion data related to morphing of the video object.

3. The video object representation data structure as claimed in claim 1, wherein the data file further includes
a group effect parameter to specify an effect that forms a group by iteratively generating the same video object, the group effect parameter containing at least information related to a generation probability.

4. The video object representation data structure as claimed in claim 3,
wherein the group effect parameter further contains information about the iterative generation of the video object, the information being related to a minimum execution time, a maximum execution time, a generation interval, a generation interval effective time, a minimum simultaneous generation number, and a maximum simultaneous generation number.

5. The video object representation data structure as claimed in claim 1, wherein the data file further includes
a number LOD parameter to control the number of video objects that form a group based on a distance between a viewpoint and the video object, the number LOD parameter containing at least information related to a LOD maximum simultaneous generation number.

6. The video object representation data structure as claimed in claim 5,
wherein the number LOD parameter further contains information about control of the number of video objects, the information being related to a LOD attenuation starting distance, a LOD attenuation ending distance, a LOD generation probability, and a LOD minimum simultaneous generation number.

7. The video object representation data structure as claimed in claim 1, wherein the data file further includes
a virtual resource identifier list to specify one or more virtual resources replaceable at the time of execution, the virtual resource identifier list containing virtual resource identifiers.

8. A recording medium storing any one of the video object representation data structures of claims 1 through 7.

9. A program for generating a video object representation data structure that defines behavior of a video object to be displayed on a screen of an image processing device, the program comprising:
an editing unit to specify one or more resources to be used for generating the video object and specify one or more plug-ins for applying a momentum as the behavior of the video object by using a GUI, and store resulting information in an intermediate language; and
a data building unit to analyze and optimize the intermediate language so as to output a data file as binary data, wherein the data file includes a resource identifier list that specifies said one or more resources to be used for generating the video object, the resource identifier list containing at least a model data identifier as an identifier of model data related to a shape of the video object, and a plug-in list that specifies said one or more plug-ins for applying momentums as the behaviors of video representation functional units to the video object, the plug-in list containing an identifier and a parameter of each of the plug-ins.

10. The program for generating a video object representation data structure as claimed in claim 9,
wherein the editing unit specifies, based on a group effect parameter containing at least information related to a generation probability, an effect that forms a group by iteratively generating the same video object.

11. The program for generating a video object representation data structure as claimed in claim 9,
wherein the editing unit controls, based on a number LOD parameter containing at least information related to a LOD maximum simultaneous generation number, the number of the video objects that form a group based on a distance between a viewpoint and the video object.

12. The program for generating a video object representation data structure as claimed in claim 9,
wherein the editing unit specifies, based on a virtual resource identifier list containing virtual resource identifiers, one or more virtual resources replaceable at the time of execution.

13. A recording medium storing any one of the programs for generating a video object representation data structure of claims 9 through 12.

14. A method of generating a video object representation data structure that defines behavior of a video object to be displayed on a screen of an image processing device, the method comprising:
an editing step of specifying one or more resources to be used for generating the video object and specifying one or more plug-ins for applying a momentum as the behavior of the video object by using a GUI, and storing resulting information in an intermediate language; and
a data building step of analyzing and optimizing the intermediate language so as to output a data file as binary data, wherein the data file includes a resource identifier list that specifies said one or more resources to be used for generating the video object, the resource identifier list containing at least a model data identifier as an identifier of model data related to a shape of the video object, and a plug-in list that specifies said one or more plug-ins for applying momentums as the behaviors of video representation functional units to the video object, the plug-in list containing an identifier and a parameter of each of the plug-ins.

15. A video software development device that generates a video object representation data structure defining behavior of a video object to be displayed on a screen of an image processing device, the video software development device comprising:
a unit to specify one or more resources to be used for generating the video object and specify one or more plug-ins for applying a momentum as the behavior of the video object by using a GUI, and store resulting information in an intermediate language; and
a unit to analyze and optimize the intermediate language so as to output a data file as binary data, wherein the data file includes a resource identifier list that specifies said one or more resources to be used for generating the video object, the resource identifier list containing at least a model data identifier as an identifier of model data related to a shape of the video object, and a plug-in list that specifies said one or more plug-ins for applying momentums as the behaviors of video representation functional units to the video object, the plug-in list containing an identifier and a parameter of each of the plug-ins.

16. An image processing program for displaying a video object on a screen of an image processing device by inputting a first data structure that defines behavior of the video object and a second data structure that includes one or more resources, the image processing program comprising:
a behavior effect control unit to control a behavior effect by specifying one or more plug-ins that apply momentums as the behaviors of video representation functional units to the video object based on a plug-in list, the plug-in list containing an identifier and a parameter of each of the plug-ins;
a resource specifying unit to specify one or more of the resources to be used for generating the video object based on a resource identifier list, the resource identifier list containing at least a model data identifier as an identifier of model data related to a shape of the video object; and
a drawing unit to draw the video object using the specified one or more plug-ins and resources.

17. The image processing program as claimed in claim 16,
wherein the behavior effect control unit controls an effect that forms a group by iteratively generating the same video object based on a group effect parameter contained in the first data structure, the group effect parameter containing at least information related to a generation probability.

18. The image processing program as claimed in claim 16,
wherein the behavior effect control unit controls the number of the video objects to be generated for forming a group depending on a distance between a viewpoint and the video object based on a number LOD parameter contained in the first data structure, the number LOD parameter containing at least information related to a LOD maximum simultaneous generation number.

19. The image processing program as claimed in claim 16,
wherein the resource specifying unit overwrites a virtual resource, which is replaceable at the time of execution, with another resource based on a virtual resource identifier in a virtual resource identifier list contained in the first data structure.

20. A recording medium storing any one of the image processing programs of claims 16 through 19.

21. An image processing method of displaying a video object on a screen of an image processing device by inputting a first data structure that defines behavior of the video object and a second data structure that includes one or more resources, the image processing method comprising:
a behavior effect control step of controlling a behavior effect by specifying one or more plug-ins that apply momentums as the behaviors of video representation functional units to the video object based on a plug-in list, the plug-in list containing an identifier and a parameter of each of the plug-ins;
a resource specifying step of specifying one or more of the resources to be used for generating the video object based on a resource identifier list, the resource identifier list containing at least a model data identifier as an identifier of model data related to a shape of the video object; and
a drawing step of drawing the video object using the specified one or more plug-ins and resources.

22. A video processing device that displays a video object on a screen of an image processing device by inputting a first data structure that defines behavior of the video object and a second data structure that includes one or more resources, the video processing device comprising:
a behavior effect control unit to control a behavior effect by specifying one or more plug-ins that apply momentums as the behaviors of video representation functional units to the video object based on a plug-in list, the plug-in list containing an identifier and a parameter of each of the plug-ins;
a resource specifying unit to specify one or more of the resources to be used for generating the video object based on a resource identifier list, the resource identifier list containing at least a model data identifier as an identifier of model data related to a shape of the video object; and
a drawing unit to draw the video object using the specified one or more plug-ins and resources.
